# EUROPÄISCHE PATENTSCHRIFT

(11) **EP 2 043 236 B1**
(45) Veröffentlichungstag und Bekanntmachung des Hinweises auf die Patenterteilung: **01.01.2014**
(21) Anmeldenummer: 08015181.4
(22) Anmeldetag: 28.08.2008
(51) Int. Cl.: H02K 15/04

(54) **Wickelvorrichtung für einen Drahtspulenkörper und Verfahren zum Herstellen eines Drahtspulenkörpers mittels der Wickelvorrichtung**
Winding device for a coil body and method for producing a coil body by means of the winding device
Dispositif de bobinage pour un corps de bobine et procédé de fabrication d'un corps de bobine à l'aide du dispositif de bobinage

(30) Priorität: 26.09.2007 DE 102007046191
(43) Veröffentlichungstag der Anmeldung: 01.04.2009
(73) Patentinhaber: Aumann GmbH, 32339 Espelkamp (DE)
(72) Erfinder: Hagedorn, Jürgen, 32312 Lübbecke (DE)
(74) Vertreter: Scheffler, Jörg

(56) Entgegenhaltungen:
- WO-A2-02/45239
- DE-C- 859 502
- GB-A- 2 152 766
- US-A1- 2002 059 714

## Beschreibung

Die Erfindung betrifft eine Wickelvorrichtung für einen Drahtspulenkörper, insbesondere eine Glockenspule, aus mehreren Spulen mit einem insbesondere zylindrischen Wickeldorn, die an einer Wickelmaschine, die eine Drahtführung aufweist, anortbar, insbesondere fest verbunden ist, wobei an der Wickelvorrichtung eine Aufnahme zum Halten eines Wickelhilfe genannten mit Hakenfortsätzen ausgestatteten Kollektors vorgesehen ist Die Erfindung betrifft weiterhin ein Verfahren zum Herstellen eines Drahtspulenkörpers, insbesondere einer Glockenspule, aus mehreren Spulen mittels der Wickelvorrichtung nach Anspruch 1, wobei der Draht von einer Wickelmaschine geführt und kontinuierlich auf einem insbesondere zylindrischen Wickeldom entsprechend der gewünschten Wicklung abgelegt wird, wobei der Draht in den Umkehrpunkten der einzelnen Spulen an den Enden des Wickeldoms zumindest teilweise um Wickelhaken und/oder um feststehende Hakenfortsätze einer Wickelhilfe geführt wird.

Das Wickeln von Glockenspulen für elektrische Kleinmaschinen macht dann große Schwierigkeiten, wenn die Spule aus sehr vielen Windungen dünnsten Drahts besteht und eine freitragende Wicklung hat. Meist begnügt man sich damit, einen schlauchförmigen Spulenkörper für sich zu wickeln und dann mit dem Kommutator zu einer Glockenspule zu verbinden. Dabei lässt sich die Glockenspule nicht so raumsparend herstellen, als wenn sie unmittelbar an dem Kommutator gewickelt wird. Auch die Festigkeit einer zusammengesetzten Glockenspule ist der einer unmittelbar gewickelten unterlegen.

Zum Wickeln eines Drahtspulenkörpers, insbesondere selbsttragender zylindrischer Spulen wie eine Glockenspule, existieren verschiedene Wickelverfahren.

Bekannt ist ein Wickelverfahren, bei dem das Wickeln eines Teils der Wicklung auf einer Hülse oder einem Dorn vorgesehen ist. Der verwendete Draht ist mit einem Backlack ausgestattet und wird durch Erwärmen des Drahtes fixiert (so genanntes Zwischenbacken). Dann werden weitere Teilwicklungen gewickelt und zwischengebacken, bis die Spule fertig ist. Die abschließende Formgebung der Spule erfolgt durch so genanntes Fertigbacken. Die Drahtenden müssen dann noch kontaktiert und zum Anschluss vorbereitet werden.

Ein weiteres in der DE 1 463 855 beschriebenes Verfahren besteht darin, dass die gesamte Wicklung auf einem Dom gewickelt wird, an dessen beiden Enden fein verteilte Stifte angebracht sind, welche die Wicklung während des Vorganges fixieren. Somit kann die gesamte Wicklung kontinuierlich gewickelt werden, ohne dass ein Zwischenbacken erforderlich ist. Anschließend erfolgt die Entfernung der fein verteilten Stifte, das Abziehen der Rohspule, das Fertigbacken und das Vorbereiten der Anschlüsse zur Kontaktierung und zum Anschließen.

Aus der DE 859 502 ist bekannt, dass solche Glockenspulen in der Weise gewickelt werden, dass auf der einen Stirnseite eines Wickeldorns ein mit Vorsprüngen zum Festhalten der Umkehrpunkte der einzelnen Spulen, auch Wickelköpfe genannt, dienender mit Nabe versehener Tragstem aufgesetzt wird, der später den Boden der Glockenspule bildet. Auf der zweiten Stirnseite des Wickeldorns werden Stifte zum Festhalten der der offenen Seite der Glocke zugekehrten Wickelköpfe eingesteckt. Nachteilig bei den aus dem Stand der Technik bekannten Verfahren ist, dass der Spulenkörper zeitaufwändiger manueller Nachbearbeitung bedarf. Üblicherweise müssen die Kontakte der Spulen zum Verbinden vorbereitet und mit den Anschlüssen verbunden werden.

Aus der US-2002/0059714 ist eine Wickelvorrichtung bekannt, wobei nach Beenden des Wickelvorgangs die Wickelhaken in eine Entnahmeposition bewegt werden, so daß der Spulenkörper vom Wickeldorn abgezogen werden kann.

Der Erfindung liegt die Aufgabe zugrunde, eine Möglichkeit zu schaffen, die Herstellung eines aus einzelnen Spulen zusammengesetzten selbsttragenden Drahtspulenkörpers, insbesondere Glockenspule, aus einem ununterbrochenen, schräg zur Achse der Glockenspule verlaufenden Draht maschinell in wenigen Arbeitsschritten, insbesondere ohne händische Arbeitsschritte, zu ermöglichen, wobei auch die Kontaktierung der Spulen mit dem Tragstem automatisiert erfolgt. Weiterhin liegt der Erfindung die Aufgabe zugrunde, eine Vorrichtung zu schaffen, mit der eine maschinelle Fertigung solcher Drahtspulenkörper, insbesondere Glockenspule, in möglichst kurzen Taktzeiten möglich ist.

Diese Aufgabe wird erfindungsgemäß mit einer Wickelvorrichtung mit den Merkmalen des Anspruchs 1 gelöst. Hierdurch ist es möglich, dass der Drahtspulenkörper von der Wickelvorrichtung entnommen werden kann, ohne dass die Wickelhaken von der Wickelvorrichtung entfernt werden müssen. Die Anzahl der einzelnen Fertigungsschritte ist hierdurch gegenüber dem Stand der Technik, bei dem Steckstifte eingesetzt werden, reduziert, wodurch eine vollautomatische Fertigung leichter realisierbar ist.

Die weitere Ausgestaltung der Erfindung ist den Unteransprüchen zu entnehmen.

Für eine hochgradig automatisierte Produktion mit zahlreichen Arbeitsschritten ist es erfindungsgemäß günstig, dass bei einer Wickelvorrichtung, die von der Wickelmaschine gelöst ist, die Wickelhaken unbeweglich sind. Hierdurch ist es möglich, dass die Wickelhaken in der eingestellten Funktionsposition verbleiben und so der Drahtspulenkörper sicher auf dem Wickeldorn gehalten wird, auch wenn die Wickelvorrichtung nicht mit der Wickelmaschine verbunden ist. Dies ist vorteilhaft, da so die Wickelvorrichtung mit dem Drahtspulenkörper an unterschiedlichen Bearbeitungsstationen einer Wickelmaschine anortbar ist und/oder zeitweise, beispielsweise in einem Speicher, zwischengelagert werden kann. Gerade durch eine Einrichtung eines Speichers zwischen den unterschiedlichen Bearbeitungsschritten ist es möglich, eine maschinelle Fertigung von Drahtspulenkörpern einzurichten, bei der die Herstellung des einzelnen Drahtspulenkörpers in einer kurzen Taktzeit möglich ist.

Für die Herstellung durchgängiger, schlauchartiger Drahtspulenkörper ist es von Vorteil, dass die Wickelhaken beidseitig des Wickeldorns angeordnet sind. Hierdurch ist es möglich, dass mit der Wickelvorrichtung schlauchartige Drahtspulenkörper hergestellt werden können.

Für das Wickeln von Spulen ist es besonders günstig, dass die Wickelhaken in der Wickel- - position gegenüber der Oberfläche des Wickeldorns erhaben sind. Hierdurch ist es möglich, dass der Draht beim Wickeln um die Wickelhaken gelegt wird. Der Draht wird somit von den Wickel haken in den Umkehrpunkten gehalten und kann während des Wickelns ständig mit einer Zugspannung beaufschlagt werden. Ein Verkleben und/oder Verbacken des Drahts während des Wickelns ist nicht erforderlich.

Ferner ist es günstig, dass die Wickelhaken in einer Entnahmeposition in der Wickelvorrichtung eingelassen sind. Hierdurch ist es möglich, dass der auf dem Wickeldom gefertigte Drahtspulenkörper in einfacher Weise durch Herabziehen beschädigungsfrei und automatisiert entnommen werden kann.

Ebenso günstig ist es, dass die Wickelhaken in der Entnahmeposition unter der Oberfläche des Wickeldoms positioniert sind. Hierdurch ist es möglich, dass der auf dem Wickeldom gefertigte Drahtspulenkörper in einfacher Weise durch Herabziehen beschädigungsfrei und automatisiert entnommen werden kann. Die Wickelhaken geben beim Positionswechsel den Draht in den Umkehrpunkten automatisch frei.

Für einen maschinellen Einsatz ist es vorteilhaft, dass die Wickelhaken in der Wickelvorrichtung zum Verschwenken axial gelagert und/oder zum Verschieben linear gelagert sind. Hierdurch ist es möglich, dass der Positionswechsel der Wickelhaken mit einer einfachen mechanischen Bewegung und/oder Bewegungskombination in der Wickelvorrichtung ermöglicht wird.

Weiterhin vorteilhaft ist es, dass die Wickelvorrichtung für mindestens eine Linearbewegung entlang einer Bahn und/oder einer Rotationsbewegung zumindest um eine Achse die Wickelmaschine beweglich ist. Hierdurch ist es möglich, die Drahtführung der Wickelmaschine und die Wickelvorrichtung während des Wickelns des Drahtspulenkörpers relativ zueinander zu positionieren.

Vorteilhaft ist es, dass die Wickelvorrichtung relativ zu der Drahtführung durch die Wickelmaschine beweglich ist. Hierdurch ist eine präzise Positionierung des Drahtes in dem Spulenkörper möglich.

Günstig für die Produktion von Glockenspulen ist es, dass die Wickelvorrichtung mit einer Aufnahme für eine Wickelhilfe ausgestattet ist. Hierdurch ist es möglich, die Wickelhilfe, die auch Tragstern, Kommutator oder Leiterplatte genannt wird, lösbar an der Wickelvorrichtung zu halten, wobei das Trennen und Verbinden der Wickelhilfe von der Aufnahme durch eine mechanische Bewegung der Wickelmaschine auf die Wickelvorrichtung ausgeübt wird.

Für die Herstellung von Glockenspulen ist es günstig, dass die Aufnahme zumindest einseitig des Wickeldoms angeordnet ist. Hierdurch ist es möglich, Glockenspulen herzustellen, die einseitig offen ausgeführt sind.

Für die automatisierte Fertigung der Drahtspulenkörper ist es günstig, dass die Wickelvorrichtung mit der Wickelmaschine durch ein Anschlusselement lösbar verbunden ist. Hierdurch ist es möglich, dass die Wickelvorrichtung mit dem Drahtspulenkörper für einzelne Fertigungsschritte in unterschiedlichen Produktionsmaschinen eingesetzt wird, insbesondere wenn der Drahtspulenkörper noch nicht durch den Backvorgang fixiert worden ist. Die Aufgabe wird weiterhin erfindungsgemäß mit einem Verfahren mit den Merkmalen des Anspruchs 8 gelöst. Hierdurch wird es möglich, dass der Drahtspulenkörper von der Wickelvorrichtung entnommen werden kann, ohne dass die Wickelhaken von der Wickelvorrichtung entfernt werden müssen.

Die weitere Ausgestaltung der Erfindung ist den Unteransprüchen zu entnehmen.

Für die Herstellung einseitig geschlossener Glockenspulen ist es von Vorteil, dass bei Verwendung einer Wickelhilfe mit feststehenden Hakenfortsätzen der Draht an einem Ende des Wickeldorns zumindest teilweise um die Wickelhaken und an dem anderen Ende des Wickeidorns zumindest teilweise um die Hakenfortsätze der Wickelhilfe geführt wird. Hierdurch wird es möglich, dass mit der Wickelvorrichtung auch Glockenspule gefertigt werden können, bei denen die Wickelhilfe, Tragstern, Kommutator oder Leiterplatte fest in der Wicklung des Drahbmckelkörpers integriert ist.

Für die Herstellung durchgängige schlauchartiger Spulenkörper ist es von Vorteil, dass die Wickelhaken zur Entnahme der Drahtspulenkörper in eine Entnahmeposition bewegt werden. Hierdurch wird es möglich, dass der auf dem Wickeldom gefertigte Drahtspulenkörper in einfacher Weise durch Herabziehen beschädigungsfrei und automatisiert entnommen werden kann.

Günstig für die maschinelle Fertigung ist es, dass die Drahtspulenkörper in mehreren aufeinander folgenden Teilverfahren, einem Vorbereiten, einem Wickelverfahren, einer Nacharbeitung, dem Backvorgang und einer Qualitätssicherung und/oder weiteren Arbeitsschritten gefertigt wird. Durch diese strukturierte Arbeitsteilung wird es möglich, die Drahtspulenkörper mit kurzen Taktzeiten zu fertigen, ohne den maschinellen Materialfluss zu unterbrechen.

Erfindungsgemäß ist es, dass einzelne und/oder alle Teilverfahren der Fertigung des Drahtspulenkörpers an unterschiedlichen Geräten der Wickelmaschine durchgeführt werden, wobei die Wickelvorrichtung zwischen der Durchführung der Teilverfahren von der Wickelmaschine gelöst wird. Hierdurch wird es möglich, dass die Wickelvorrichtung mit dem Drahtspulenkörper an unterschiedlichen Bearbeitungsstationen einer Wickelmaschine angeordnet wird. Die Wickelvorrichtung kann somit zeitweise, beispielsweise in einem Speicher, zwischengelagert werden oder unterschiedlichen Geräten zu beliebigen Zeitpunkten zugeführt werden. Dabei kann der teilgefertigte Drahtspulenkörper auf der Wickelvorrichtung verbleiben. Gerade durch eine Einrichtung eines Speichers zwischen den unterschiedlichen Bearbeitungsschritten ist es möglich, eine maschinelle Fertigung von Drahtspulenkörpern einzurichten, bei der die Herstellung des einzelnen Drahtspulenkörpers in einer kurzen Taktzeit möglich ist.

Vorteilhaft ist es auch, das nach Abschluss des Wickelvorgangs die Drahtspulenkörper einem Backvorgang ausgesetzt werden. Hierdurch wird es möglich, die Aktivierung des Backlacks und die Fixierung des Drahtspulenkörpers unabhängig von dem Vorgang des Wickelns durchzuführen. So ist eine räumliche Trennung von Wickeln und Backen möglich, was eine effektive, schnelle und stark maschinalisierte Fertigung begünstigt.

Weiterhin vorteilhaft ist es, dass bei dem Backvorgang die Drahtspulenkörper ein erstes Mal erwärmt und die einzelnen Drähte in ihrer Lage fixiert werden und nach dem ersten Erwärmen der Drahtspulenkörper die Wickelhaken in die Entnahmeposition bewegt werden, um dann, nachdem die Wickelhaken in die Entnahmeposition bewegt wurden, den Drahtspulenkörper einer zweiten Erwärmung zu unterziehen. Hierdurch wird es möglich, dass der unter Zugspannung des Drahts gewickelte Drahtspulenkörper ohne Verformungen durch Eigenspannung von den Wickelhaken freigegeben werden kann, da bei der ersten Erwärmung die einzelnen Drähte des Drahtspulenkörpers miteinander verbunden werden. Die abschließende zweite Erwärmung dient der endgültigen Verbackung des gesamten Drahtspulenkörpers.

Vorteilhaft ist es, dass für den Backvorgang ein Verbackwerkzeug an die äußere Hüllfläche der Drahtspulenkörper angelegt und/oder der Drahtspulenkörper über Kontakte an der Wickelhilfe einer elektrischen Spannung ausgesetzt wird. Hierdurch wird es möglich, dass nicht nur von Außen auf den Drahtspulenkörper aufgebrachte Wärmeenergie den Backlack zum Verkleben der Drähte anregt, sondern der Draht selber Wärme abgibt. So wird in allen Schichten des Drahtspulenkörpers sofort die erforderliche Temperatur erreicht und der Backvorgang kann präzise und schnell durchgeführt werden. Günstig ist dabei, dass der elektrische Kontakt über die Kontaktflächen der Wickelhilfe, insbesondere Tragstem, Kommutator oder Leiterplatte, möglich ist, da sich diese maschinell leicht ansteuern lassen.

Ebenso vorteilhaft ist es, dass der Drahtspulenkörper während des Backvorgangs mittels des Durchflusses eines elektrischen Stroms und/oder des beheizten Verbackwerkzeugs erwärmt wird. Hierdurch wird es möglich, dass nicht nur von außen auf den Drahtspulenkörper aufgebrachte Wärmeenergie den Backlack zum Verkleben der Drähte anregt, sondern der Draht selber Wärme abgibt. So wird in allen Schichten des Drahtspulenkörpers sofort die erforder liche Temperatur erreicht und der Backvorgang kann präzise und schnell durchgeführt werden.

Günstig ist, dass in einem ersten Teil des Backvorgangs nur ein Teil des Drahtspulenkörpers erwärmt wird. dann die Wickelhaken in die Entnahmeposition bewegt werden und anschließend der vollständige Drahtspulenkörper erwärmt wird. Hierdurch wird es möglich, dass der Drahtspulenkörper automatisiert fixiert wird, unabhängig vom Wickeln des Drahtspulenkarpers.

Für die maschinelle Fertigung von Glockenspulen ist es günstig, dass beim Vorbereiten die Wickelhilfe an der Aufnahme der Wickelvorrichtung befestigt wird. Hierdurch wird es möglich, Glockenspule mit eingewickeltem Kommutator mittels der erfindungsgemäßen Wickelvorrichtung maschinell zu fertigen.

Der Verfahrensablauf zur Herstellung des Drahtspulenkörpers gestaltet sich derart, dass bei dem Wickelverfahren der Draht zunächst von der Wickelmaschine um den Hilfszapfen der Wickelvorrichtung gewickelt wird. In einem zweiten Arbeitsschritt wird der Draht zwischen dem Parkierungsstift und dem Hilfszapfen von der Wickelmaschine durchtrennt und in einem dritten Arbeitschritt auf dem Wickeldom und um die Wickelhaken der Wickelvorrichtung und/oder die Hakenfortsätze der Wickelhilfe abgelegt, wobei der Draht zwischenzeitlich für jede herzustellende Phase an dem Hilfszapfen ausgeschleift wird. Zum Abschluss wird der Draht um den Hilfszapfen gewickelt und abschließend von dem Parkierstift aufgenommen und schließlich wird er von der Wickelmaschine zwischen Hilfszapfen und Parkierstift durchtrennt. Hierdurch wird es möglich, die gesamte Fertigung der Glockenspule automatisiert und maschinell durchzuführen, wobei die Trennung in einzelne Arbeitsschritte zu einer Verkürzung der Fertigungszeit führt.

Um eine vollständig maschinelle Fertigung zu erreichen, ist es günstig, dass zur Nacharbeitung der Draht einzelner Wicklungen des Drahtspulenkörpers an Kontaktflächen der Wickel hilfe verschweißt wird und überstehende Reste des Drahts, insbesondere durch Abschneiden und Absaugen, entfernt werden. Hierdurch wird es möglich, auf einer Wickelvorrichtung in einem Produktionsdurchgang vollautomatisch eine einsatzfähigen Glockenspule zu fertigen.

Abschließend ist es üblich, dass bei einer Qualitätssicherung der Drahtspulenkörper geprüft, gesäubert und der Wickelvorrichtung entnommen wird. Hierdurch wird es möglich, den hohen Anforderungen an industriell gefertigte Güter gerecht zu werden.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in
Fig. 1a eine äußere Ansicht eines Drahtspulenkörpers, insbesondere Glockenspule;
Fig. 1b eine Schnittdarstellung der gleichen Glockenspule;
Fig. 1c eine schematische Darstellung der Abwicklung des Drahtspulenkörpers;
Fig. 2 eine Ansicht einer Wickelvorrichtung;
Fig. 3 und 4 eine geschnittene Darstellung der in Figur 2 gezeigten Wickelvorrichtung.

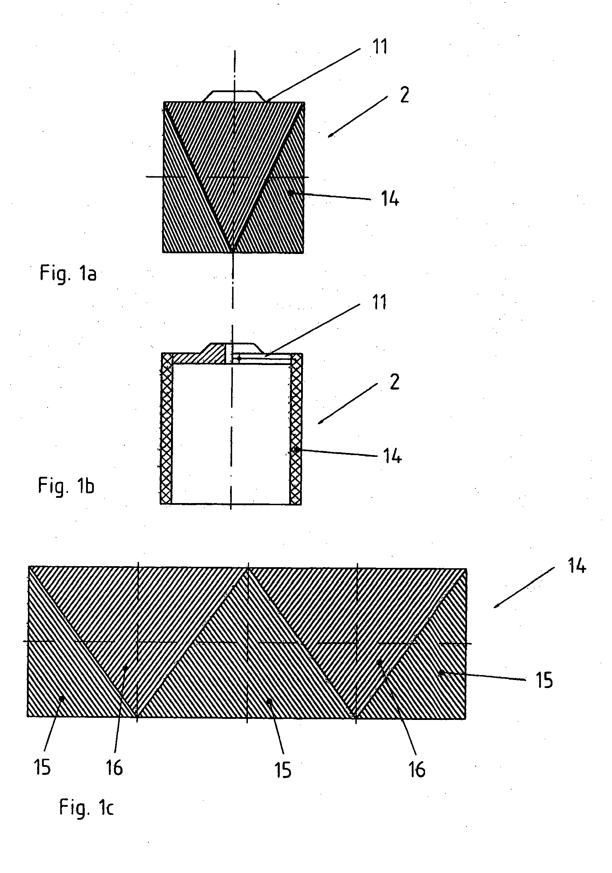

Figur 1a bis 1b stellt die äußere Ansicht und einen Schnitt eines Drahtspulenkörpers 2 dar. Dieser wird wegen seines mechanischen Aufbaus "Glockenspule" genannt. Die dargestellte Glockenspule besteht aus der Drahtwicklung 14 und einem Kollektor 11 mit seiner Verbindung zur Drahtwicklung 14.

Figur 1c zeigt die Abwicklung der Drahtwicklung 14 des Drahtspulenkörpers 2. Die Struktur, welche schräge Leiter aufweist, die teils in den Feldern 15 in die eine Richtung und in den Feldern 16 in die andere Richtung laufen, bildet bei der hier gezeigten Wicklungsart auf der äußeren und der inneren Mantelfläche Leiterfelder in Form gleichschenkliger Dreiecke, aus deren Anzahl sich die Polzahl der Wicklung ergibt.

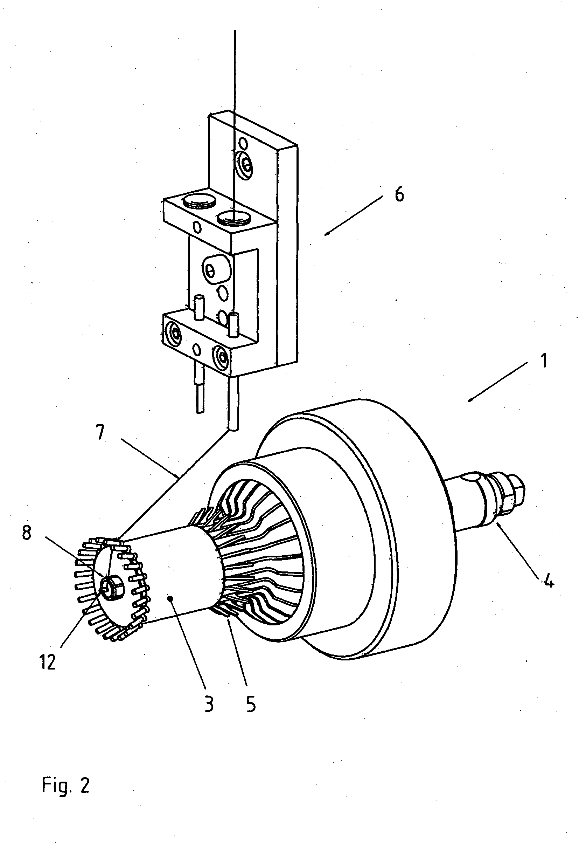

Figur 2 zeigt eine Ansicht einer Wickelvorrichtung 1 zum Beginn der Herstellung Glockenspule. Die Wickelvorrichtung 1 ist in einer hier nicht dargestellten Wickelmaschine lösbar fixiert. Der Draht 7 zur Herstellung der Glockenspule wird von einer Drahtführung 6 entsprechend eines frei programmierten Ablaufs geführt. Die Wickelvorrichtung 1 besteht aus einem Wickeldorn 3, einem Anschlusselement 4, Wickelhaken 5, einer Aufnahme 8 und einem Hilfszapfen 12. Das Anschlusselement 4 dient der Fixierung der Wickelhilfe 1 in der Wickelmaschine und der Übertragung mechanischer Bewegungen von der Wickelmaschine auf die Wickelvorrichtung 1 und deren Komponenten. Zum Beginn des Wickelvorgangs wird der Draht 7 zunächst von der Wickelmaschine um den Hilfszapfen 12 der Wickelvorrichtung 1 gewickelt. Anschließend wird der Draht 7 zwischen einem nicht dargestellten Parkierungsstift und dem Hilfszapfen 12 von der Wickelmaschine durchtrennt. In einem dritten Arbeitschritt wird der Draht 7 auf dem Wickeldorn 3 und um die Wickelhaken 5 der Wickelvorrichtung 1 und/oder um Hakenfortsätze 10 einer Wickelhilfe 9 abgelegt, wobei der Draht 7 zwischenzeitlich für jede herzustellende Phase an dem Nilfszapfen 12 ausgeschleift wird. Zum Abschluss des Wickelvorgangs wird der Draht 7 um den Hilfszapfen 12 gewickelt und von dem Parkierstift aufgenommen um schließlich von der Wickelmaschine zwischen Hilfszapfen 12 und Parkierstift durchtrennt zu werden. Die Wickelhilfe 9 ist ein mit Hakenfortsätzen 10 ausgestatteter Kollektor 11, die von der Aufnahme 8 der Wickelvorrichtung 1 gehalten wird. Der Draht 7 der einzelnen Wicklungen des Drahtspulenkörpers 2 wird nach dem Wickelvorgang an elektrischen Kontaktflächen 13 der Wickelhilfe 9 verschweißt. Überstehende Reste des Drahts 7, werden durch Abschneiden und Absaugen, entfernt. Der Wickeldorn 3 trägt den in Figur 1 dargestellten Drahtspulenkörper 2 bis dieser nach einem Verbacken der Drahtwicklungen formstabil ist. Nach dem Backvorgang kann die Glockenspule von der Wickelvorrichtung 1 entnommen werden. Dazu werden die Wickelhaken 5 in dem Korpus der Wickelvorrichtung 1 unter die Oberfläche des Wickeldoms 3 versenkt.

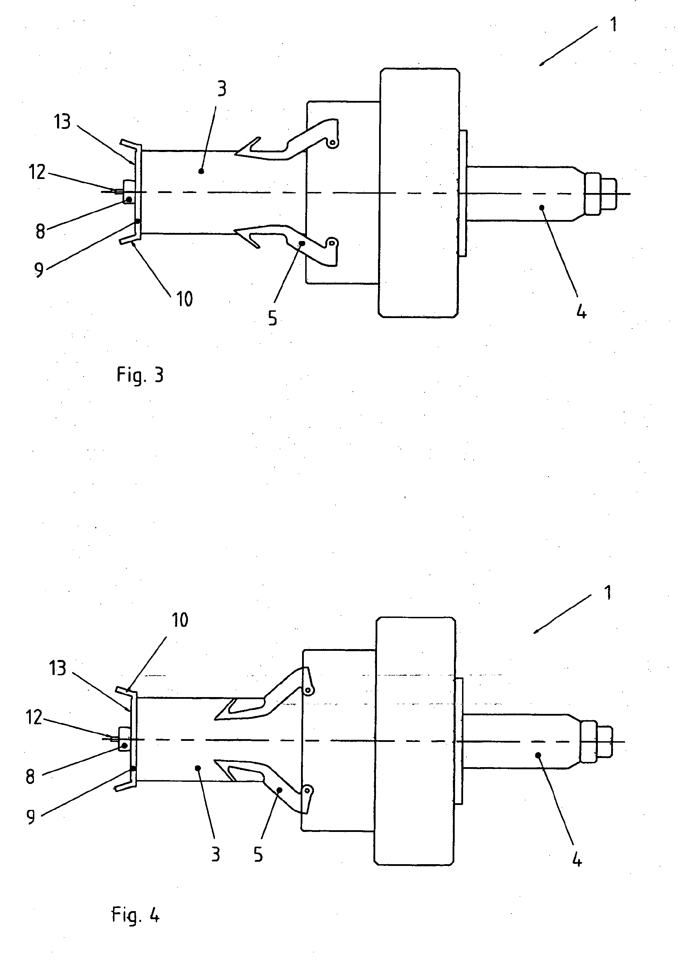

Figur 3 zeigt eine geschnittene Darstellung der in Figur 2 gezeigten Wickelvorrichtung 1, bei der sich die Wickelhaken 5 in der Wickelposition befinden.

Figur 4 zeigt eine geschnittene Darstellung der in Figur 2 gezeigten Wickelvorrichtung 1, bei der sich die Wickelhaken 5 in der Entnahmeposition befinden.

## Patentansprüche

1. Wickelvorrichtung (1) für einen Drahtspulenkörper (2), insbesondere eine Glockenspule, aus mehreren Spulen mit einem insbesondere zylindrischen Wickeldorn (3), die an einer Wickelmaschine, die eine Drahtführung (6) aufweist, anortbar, insbesondere fest verbunden ist, wobei an der Wickelvorrichtung (1) eine Aufnahme (8) zum Halten eines Wickelhilfe (9) genannten, mit Hakenfortsätzen (10) ausgestatteten Kollektors (11) vorgesehen ist und die Wickelvorrichtung (1) mit der Wickelvorrichtung (1) verbundene Wickelhaken (5) aufweist, die zur rastenden Einstellung in zwei Funktionspositionen, einer Wickelposition und einer Entnahmeposition, beweglich sind, **dadurch gekennzeichnet, dass** die Wickelhaken (5) bei einer Wickelvorrichtung (1), die von der Wickelmaschine gelöst ist, unbeweglich sind.

2. Wickelvorrichtung (1) nach Anspruch 1, **dadurch gekennzeichnet, dass** der Wickeldorn (3) mit Steckstiften zum Halten der Umkehrpunkte der einzelnen Spulen ausgeführt ist.

3. Wickelvorrichtung (1) nach zumindest einem der vorhergehenden Ansprüche, **dadurch gekennzeichnet, dass** die Wickelhaken (5) in der Wickelposition gegenüber der Oberfläche des Wickeldorns (3) erhaben und in einer Entnahmeposition unter der Oberfläche des Wickeldorns (3) positioniert sind.

4. Wickelvorrichtung (1) nach zumindest einem der vorhergehenden Ansprüche, **dadurch gekennzeichnet, dass** die Wickelhaken (5) in der Wickelvorrichtung (1) zum Verschwenken axial gelagert und/oder zum Verschieben linear gelagert sind.

5. Wickelvorrichtung (1) nach zumindest einem der vorhergehenden Ansprüche, **dadurch gekennzeichnet, dass** die Wickelvorrichtung (1) relativ zu der Drahtführung durch die Wickelmaschine beweglich ist und/oder für mindestens eine Linearbewegung entlang zumindest einer Bahn und/oder einer Rotationsbewegung zumindest um eine Achse der Wickelmaschine beweglich ist.

6. Wickelvorrichtung (1) nach zumindest einem der vorhergehenden Ansprüche, **dadurch gekennzeichnet, dass** die Wickelvorrichtung (1) mit der Wickelmaschine durch ein Anschlusselement (4) lösbar verbunden ist.

7. Wickelvorrichtung (1) nach zumindest einem der vorhergehenden Ansprüche, **dadurch gekennzeichnet, dass** eine Antriebseinrichtung der Wickelmaschine zumindest vier unabhängig, insbesondere translatorisch, rotatorisch und/oder axial bewegbare Achsen aufweist, wobei die Bewegungen der Achsen mittels einer Steuerung, insbesondere Programmsteuerung, frei wählbar programmierbar sind.

8. Verfahren zum Herstellen eines Drahtspulenkörpers (2), insbesondere einer Glockenspule, aus mehreren Spulen mittels der Wickelvorrichtung (1) nach Anspruch 1, wobei der Draht von einer Wickelmaschine geführt und kontinuierlich auf einem insbesondere zylindrischen Wickeldorn (3) entsprechend der gewünschten Wicklung abgelegt wird, wobei der Draht in den Umkehrpunkten der einzelnen Spulen an den Enden des Wickeldorns (3) zumindest teilweise um Wickelhaken (5) und/oder um feststehende Hakenfortsätze (10) einer Wickelhilfe (9) geführt wird und die Wickelhaken (5) zur Entnahme des Drahtspulenkörpers (2) von der Wickelvorrichtung (1) in eine Entnahmeposition unter die Oberfläche des Wickeldorns (3) bewegt werden, **dadurch gekennzeichnet, dass** einzelne und/oder alle Teilverfahren der Fertigung des Drahtspulenkörpers (2) an unterschiedlichen Geräten der Wickelmaschine durchgeführt werden, wobei die Wickelvorrichtung (1) zwischen der Durchführung der Teilverfahren von der Wickelmaschine gelöst wird.

9. Verfahren zum Herstellen eines Drahtspulenkörpers (2) nach Anspruch 8, **dadurch gekennzeichnet, dass** der Draht in den Umkehrpunkten der einzelnen Spulen um Steckstifte geführt wird.

10. Verfahren zum Herstellen eines Drahtspulenkörpers (2) nach zumindest einem der vorhergehenden Ansprüche 8 und 9, **dadurch gekennzeichnet, dass** der Drahtspulenkörper (2) in mehreren aufeinander folgenden Teilverfahren, einem Vorbereiten, einem Wickelvorgang, einer Nacharbeitung, dem Backvorgang und einer Qualitätssicherung und/oder weiteren Arbeitsschritten gefertigt wird.

11. Verfahren zum Herstellen eines Drahtspulenkörpers (2) nach zumindest einem der vorhergehenden Ansprüche 8 bis 10, **dadurch gekennzeichnet, dass** nach Abschluss des Wickelvorgangs der Drahtspulenkörper (2) in einem ersten Backvorgang ein Teil des Drahtspulenkörpers (2) erwärmt wird, dann die Wickelhaken (5) in die Entnahmeposition bewegt werden und anschließend der vollständige Drahtspulenkörper (2) erwärmt wird.

12. Verfahren zum Herstellen eines Drahtspulenkörpers (2) nach zumindest einem der vorhergehenden Ansprüche 8 bis 11, **dadurch gekennzeichnet, dass** der Drahtspulenkörper (2) während des Backvorgangs mittels des Durchflusses eines elektrischen Stroms und/oder eines an der äußere Hüllfläche des Drahtspulenkörpers (2) anlegbaren beheizten Verbackwerkzeugs erwärmt wird.

13. Verfahren zum Herstellen eines Drahtspulenkörpers (2) nach zumindest einem der vorhergehenden Ansprüche 8 bis 12, **dadurch gekennzeichnet, dass** bei dem Wickelvorgang der Draht zunächst von der Wickelmaschine um den Hilfszapfen (12) der Wickelvorrichtung (1) gewickelt wird, in einem zweiten Arbeitsschritt der Draht zwischen einem Parkierungsstift der Wickelmaschine und dem Hilfszapfen (12) von der Wickelmaschine durchtrennt wird, in einem dritten Arbeitschritt auf dem Wickeldorn (3) und um die Wickelhaken (5) der Wickelvorrichtung (1) abgelegt wird, wobei der Draht zwischenzeitlich für jede herzusteliende Phase an dem Hilfszapfen (12) ausgeschleift wird, zum Abschluss um den Hilfszapfen (12) gewickelt wird, der Draht abschließend von dem Parkierstift der Wickelmaschine aufgenommen wird und schließlich der Draht von der Wickelmaschine zwischen Hilfszapfen (12) und Parkierstift durchtrennt wird.

14. Verfahren zum Herstellen eines Drahtspulenkörpers (2) nach zumindest einem der vorhergehenden Ansprüche 8 bis 13, **dadurch gekennzeichnet, dass** beim Vorbereiten die Wickelhilfe (9) an der Aufnahme (8) der Wickelvorrichtung (1) befestigt wird und zur Nacharbeitung der Draht einzelner Spulen des Drahtspulenkörpers (2) an Kontaktflächen (13) der Wickelhilfe (9) verschweißt wird, wobei überstehende Reste des Drahts, insbesondere durch Abschneiden und Absaugen, entfernt werden.

## Claims

1. Winding device (1) for a wire coil body (2), in particular a bell coil, comprising multiple coils, which has a winding mandrel (3), in particular a cylindrical winding mandrel (3), and can be located on, in particular is fixedly connected to, a winding machine, which has a wire guide (6), wherein a receptacle (8) for retaining a collector (11), referred to as a winding aid (9) and provided with hook extensions (10), is provided on the winding device (1) and the winding device (1) has winding hooks (5), which are connected to the winding device (1) and are movable for setting in a locking manner in two functional positions, a winding position and a removal position, **characterized in that** the winding hooks (5) are immovable in the case of a winding device (1) that has been detached from the winding machine.

2. Winding device (1) according to Claim 1, **characterized in that** the winding mandrel (3) is formed with insertion pins for retaining the reversal points of the individual coils.

3. Winding device (1) according to at least one of the preceding claims, **characterized in that** the winding hooks (5) are raised with respect to the surface of the winding mandrel (3) in the winding position and are positioned below the surface of the winding mandrel (3) in a removal position.

4. Winding device (1) according to at least one of the preceding claims, **characterized in that** the winding hooks (5) are axially mounted for pivoting and/or linearly mounted for displacing in the winding device (1).

5. Winding device (1) according to at least one of the preceding claims, **characterized in that** the winding device (1) is movable in relation to the wire guide through the winding machine and/or is movable for at least a linear movement along at least one path and/or rotational movement at least about an axis of the winding machine.

6. Winding device (1) according to at least one of the preceding claims, **characterized in that** the winding device (1) is detachably connected to the winding machine by a connection element (4).

7. Winding device (1) according to at least one of the preceding claims, **characterized in that** a driving device of the winding machine has at least four independently movable, in particular translatorily, rotationally and/or axially movable, axles, the movements of the axles being programmable in a freely selectable manner by means of a control, in particular a program control.

8. Method for producing a wire coil body (2), in particular a bell coil, from multiple coils by means of the winding device (1) according to Claim 1, wherein the wire is guided from a winding machine and placed continuously on a winding mandrel (3), in particular a cylindrical winding mandrel (3), in a way corresponding to the desired winding, wherein the wire is guided at least partially around winding hooks (5) and/or around fixed hook extensions (10) of a winding aid (9) at the reversal points of the individual coils at the ends of the winding mandrel (3), and the winding hooks (5) are moved into a removal position below the surface of the winding mandrel (3) for the removal of the wire coil body (2) from the winding device (1), **characterized in that** some and/or all of the part-methods of the production of the wire coil body (2) are implemented on different units of the winding machine, the winding device (1) being detached from the winding machine at the times between the implementation of the part-methods.

9. Method for producing a wire coil body (2) according to Claim 8, **characterized in that** the wire is guided around insertion pins at the reversal points of the individual coils.

10. Method for producing a wire coil body (2) according to at least one of the preceding Claims 8 and 9, **characterized in that** the wire coil body (2) is produced in multiple successive part-methods, a preparation, a winding operation, a finishing, the baking operation and a quality assurance and/or further working steps.

11. Method for producing a wire coil body (2) according to at least one of the preceding Claims 8 to 10, **characterized in that**, after completion of the winding operation on the wire coil bodies (2), part of the wire coil body (2) is heated in a first baking operation, then the winding hooks (5) are moved into the removal position and after that the complete wire coil body (2) is heated.

12. Method for producing a wire coil body (2) according to at least one of the preceding Claims 8 to 11, **characterized in that** the wire coil body (2) is heated during the baking operation by means of the flowing through of an electric current and/or a heated baking tool that can be applied to the outer enveloping surface of the wire coil body (2).

13. Method for producing a wire coil body (2) according to at least one of the preceding Claims 8 to 12, **characterized in that**, in the winding operation, the wire is initially wound by the winding machine around the auxiliary pin (12) of the winding device (1), in a second working step the wire is severed from the winding machine between a parking pin of the winding machine and the auxiliary pin (12), in a third working step it is placed on the winding mandrel (3) and around the winding hooks (5) of the winding device (1), the wire in the meantime being unlooped from the auxiliary pin (12) for each phase to be produced, in conclusion it is wound around the auxiliary pin (12), finally the wire is received by the parking pin of the winding machine and, lastly, the wire is severed from the winding machine between the auxiliary pin (12) and the parking pin.

14. Method for producing a wire coil body (2) according to at least one of the preceding Claims 8 to 13, **characterized in that**, during the preparation, the winding aid (9) is attached to the receptacle (8) of the winding device (1) and, for the finishing, the wire of individual coils of the wire coil body (2) is welded to contact areas (13) of the winding aid (9), left-over remains of the wire being removed, in particular by cutting off and sucking away.

## Revendications

1. Dispositif de bobinage (1) pour un corps de bobine de fil (2), en particulier une bobine cloche, constitué de plusieurs bobines avec un mandrin de bobinage notamment cylindrique (3), qui peut être disposé, en particulier connecté fixement, sur une machine de bobinage qui présente un guidage de fil (6), un logement (8) étant prévu pour retenir un collecteur (11) désigné par auxiliaire de bobinage (9), muni de saillies en forme de crochets (10) et le dispositif de bobinage (1) présentant des crochets de bobinage (5) connectés au dispositif de bobinage (1), lesquels peuvent être déplacés pour l'ajustement par encliquetage dans deux positions fonctionnelles, une position de bobinage et une position d'enlèvement, **caractérisé en ce que** les crochets de bobinage (5) sont immobiles dans un dispositif de bobinage (1) qui est libéré par la machine de bobinage.

2. Dispositif de bobinage (1) selon la revendication 1, **caractérisé en ce que** le mandrin de bobinage (3) est réalisé avec des goupilles d'enfichage pour retenir les points d'inversion des bobines individuelles.

3. Dispositif de bobinage (1) selon au moins l'une quelconque des revendications précédentes, **caractérisé en ce que** les crochets de bobinage (5) dans la position de bobinage sont rehaussés par rapport à la surface du mandrin de bobinage (3) et dans une position d'enlèvement sont positionnés en dessous de la surface du mandrin de bobinage (3).

4. Dispositif de bobinage (1) selon au moins l'une quelconque des revendications précédentes, **caractérisé en ce que** les crochets de bobinage (5) sont supportés axialement en vue du pivotement dans le dispositif de bobinage (1) et/ou sont supportés de manière linéaire en vue d'un coulissement.

5. Dispositif de bobinage (1) selon au moins l'une quelconque des revendications précédentes, **caractérisé en ce que** le dispositif de bobinage (1) est déplaçable par rapport au guidage de fil par le biais de la machine de bobinage et/ou est déplaçable pour effectuer au moins un mouvement linéaire le long d'au moins une bande et/ou un mouvement de rotation au moins autour d'un axe de la machine de bobinage.

6. Dispositif de bobinage (1) selon au moins l'une quelconque des revendications précédentes, **caractérisé en ce que** le dispositif de bobinage (1) est connecté de manière desserrable à la machine de bobinage par un élément de raccordement (4).

7. Dispositif de bobinage (1) selon au moins l'une quelconque des revendications précédentes, **caractérisé en ce qu'**un dispositif d'entraînement de la machine de bobinage présente au moins quatre axes déplaçables indépendamment, notamment par translation, rotation et/ou axialement, les mouvements des axes pouvant être librement programmés au moyen d'une commande, en particulier d'une commande programmable.

8. Procédé de fabrication d'un corps de bobine de fil (2), en particulier une bobine cloche, constitué de plusieurs bobines, au moyen du dispositif de bobinage (1) selon la revendication 1, le fil étant guidé depuis une machine de bobinage et étant déposé en continu sur un mandrin de bobinage (3) notamment cylindrique en fonction de l'enroulement souhaité, le fil dans les points d'inversion des bobines individuelles étant guidé au niveau des extrémités du mandrin de bobinage (3) au moins en partie autour de crochets de bobinage (5) et/ou autour de saillies en forme de crochets fixes (10) d'un auxiliaire de bobinage (9) et les crochets de bobinage (5), pour enlever le corps de bobine de fil (2) du dispositif de bobinage (1), dans une position d'enlèvement, étant déplacés en dessous de la surface du mandrin de bobinage (3), **caractérisé en ce que** des procédés partiels individuels et/ou tous les procédés partiels de la fabrication du corps de bobine de fil (2) sont effectués sur des appareils différents de la machine de bobinage, le dispositif de bobinage (1) étant libéré entre la mise en oeuvre des procédés partiels par la machine de bobinage.

9. Procédé de fabrication d'un corps de bobine de fil (2) selon la revendication 8, **caractérisé en ce que** le fil est guidé autour de goupilles d'enfichage dans les points d'inversion des bobines individuelles.

10. Procédé de fabrication d'un corps de bobine de fil (2) selon au moins l'une quelconque des revendications précédentes 8 et 9, **caractérisé en ce que** le corps de bobine de fil (2) est fabriqué en plusieurs procédés partiels successifs, un procédé de préparation, une opération de bobinage, un post-traitement, l'opération de cuisson et un contrôle de qualité et/ou d'autres étapes de travail.

11. Procédé de fabrication d'un corps de bobine de fil (2) selon au moins l'une quelconque des revendications précédentes 8 à 10, **caractérisé en ce qu'**à la fin de l'opération de bobinage du corps de bobine de fil (2), une partie du corps de bobine de fil (2) est chauffée dans une première opération de cuisson, puis les crochets de bobinage (5) sont déplacés dans la position d'enlèvement et ensuite le corps de bobine de fil complet (2) est chauffé.

12. Procédé de fabrication d'un corps de bobine de fil (2) selon au moins l'une quelconque des revendications précédentes 8 à 11, **caractérisé en ce que** le corps de bobine de fil (2), pendant l'opération de cuisson, est chauffé au moyen du passage d'un courant électrique et/ou d'un outil de cuisson chauffé pouvant être appliqué sur la surface d'enveloppe extérieure du corps de bobine de fil (2).

13. Procédé de fabrication d'un corps de bobine de fil (2) selon au moins l'une quelconque des revendications précédentes 8 à 12, **caractérisé en ce que** lors de l'opération de bobinage, le fil est d'abord enroulé par la machine de bobinage autour du tourillon auxiliaire (12) du dispositif de bobinage (1), le fil est sectionné dans une deuxième étape de travail par la machine de bobinage entre une goupille de stationnement de la machine de bobinage et le tourillon auxiliaire (12), dans une troisième étape de travail, le fil est déposé sur le mandrin de bobinage (3) et autour des crochets de bobinage (5) du dispositif de bobinage (1), le fil étant entre-temps soumis à un meulage pour chaque phase à fabriquer au niveau du tourillon auxiliaire (12) et pour finir étant enroulé autour du tourillon auxiliaire (12), le fil étant ensuite reçu par la goupille de stationnement de la machine de bobinage et finalement le fil étend sectionné par la machine de bobinage entre le tourillon auxiliaire (12) et la goupille de stationnement.

14. Procédé de fabrication d'un corps de bobine de fil (2) selon au moins l'une quelconque des revendications précédentes 8 à 13, **caractérisé en ce que** lors de la préparation, l'auxiliaire de bobinage (9) est fixé sur le logement (8) du dispositif de bobinage (1) et pour le post-traitement, le fil de bobines individuelles du corps de bobine de fil (2) est soudé sur les surfaces de contact (13) de l'auxiliaire de bobinage (9), les résidus excessifs de fil étant éliminés, en particulier par sectionnement et aspiration.
